# EUROPÄISCHE PATENTSCHRIFT

(11) **EP 1 282 897 B1**
(45) Veröffentlichungstag und Bekanntmachung des Hinweises auf die Patenterteilung: **03.12.2003**
(21) Anmeldenummer: 01933630.4
(22) Anmeldetag: 24.04.2001
(51) Int. Cl.: G10L 15/06

(54) **VERFAHREN ZUM ERZEUGEN EINER SPRACHDATENBANK FÜR EINEN ZIELWORTSCHATZ ZUM TRAINIEREN EINES SPRACHERKENNUNGSSYSTEMS**
METHOD FOR CREATING A SPEECH DATABASE FOR A TARGET VOCABULARY IN ORDER TO TRAIN A SPEECH RECOGNITION SYSTEM
PROCEDE POUR PRODUIRE UNE BANQUE DE DONNEES VOCALES POUR UN LEXIQUE CIBLE POUR L'APPRENTISSAGE D'UN SYSTEME DE RECONNAISSANCE VOCALE

(30) Priorität: 09.05.2000 DE 10022586
(43) Veröffentlichungstag der Anmeldung: 12.02.2003
(73) Patentinhaber: SIEMENS AKTIENGESELLSCHAFT, 80333 München (DE)
(72) Erfinder: BUDDE, Mark, 46240 Bottrop (DE); SCHNEIDER, Tobias, 81825 München (DE)
(86) Internationale Anmeldenummer: DE0101546
(87) Internationale Veröffentlichungsnummer: WO01086634

(56) Entgegenhaltungen:
- US-A- 5 579 436
- US-A- 5 850 627
- HUNT ANDREW J ET AL: "Unit selection in a concatenative speech synthesis system using a large speech database" PROCEEDINGS OF THE 1996 IEEE INTERNATIONAL CONFERENCE ON ACOUSTICS, SPEECH, AND SIGNAL PROCESSING, ICASSP. PART 1 (OF 6);ATLANTA, GA, USA MAY 7-10 1996, Bd. 1, 1996, Seiten 373-376, XP002172898 ICASSP IEEE Int Conf Acoust Speech Signal Process Proc;ICASSP, IEEE International Conference on Acoustics, Speech and Signal Processing - Proceedings 1996 IEEE, Piscataway, NJ, USA
- BENTEZ M C ET AL: "Different confidence measures for word verification in speech recognition" SPEECH COMMUNICATION,ELSEVIER SCIENCE PUBLISHERS, AMSTERDAM,NL, Bd. 32, Nr. 1-2, September 2000 (2000-09), Seiten 79-94, XP004216247 ISSN: 0167-6393

## Beschreibung

Die Erfindung betrifft ein Verfahren zum Erzeugen einer Sprachdatenbank für einen Zielwortschatz zum Trainieren eines Spracherkennungssystems.

Spracherkennungssysteme gibt es für unterschiedlichste Anwendungen. Z.B. werden in automatischen Diktiersystemen Spracherkennungssysteme verwendet, die einen sehr umfangreichen Wortschatz erkennen können, jedoch üblicherweise benutzerspezifisch ausgebildet sind, das heißt, dass sie lediglich von einem einzigen Benutzer verwendet werden können, der das Spracherkennungssystem auf seine persönliche Aussprache trainiert hat. Automatische Vermittlungssysteme in Telefonanlagen verwenden hingegen sprecherunabhängige Spracherkennungssysteme. Diese Spracherkennungssysteme benötigen einen wesentlich geringeren Wortschatz, da bei Telefonvermittlungssystemen z.B. nur wenige unterschiedliche Wörter gesprochen werden, um sich mit einem Fernsprechteilnehmer verbinden zu lassen.

Herkömmlicherweise wurde für sprecherunabhängige Spracherkennungssysteme ein Zielwortschatz (Applikationswortschatz) festgelegt. Es werden dann Trainingstexte zusammengestellt, die überwiegend Wörter aus diesem Zielwortschatz enthalten. Diese Trainingstexte werden von Sprechern gesprochen und über ein Mikrofon aufgezeichnet. Üblicherweise lässt man einen solchen Trainingstext von 100 bis 5000 Sprechern sprechen. Die gesprochenen Texte liegen somit als elektrische Sprachsignale vor. Die zu sprechenden Texte werden auch in ihre phonetische Beschreibung umgesetzt. Diese phonetische Beschreibung und die korrespondierenden Sprachsignale werden während der Trainingsphase des Spracherkennungssystems dem Spracherkennungssystem zugeführt. Das Spracherkennungssystem lernt hierdurch den Zielwortschatz. Da der Zielwortschatz von einer großen Anzahl von Sprechern gesprochen worden ist, ist das Spracherkennungssystem unabhängig von einem einzelnen bestimmten Sprecher.

Das Erstellen einer speziellen Applikation mit einem vorbestimmten Zielwortschatz und das Sprechen durch mehrere Sprecher, so dass eine sprecherunabhängige Sprachdatenbank erzeugt wird, dauert in der Regel zwischen zwei bis sechs Monaten. Das Erstellen derartiger anwendungsspezifischer Sprachdatenbanken verursacht den größten Kostenfaktor beim Anpassen eines bestehenden Spracherkennungssystems an eine bestimmte Applikation. Ein Beispiel zur Erstellung einer Sprachdatenbank ist in US-A-5 579 436 offenbart. Es besteht deshalb ein erheblicher Bedarf nach einem Verfahren, mit welchen kostengünstig und schnell eine Sprachdatenbank zum Trainieren eines sprecherunabhängigen Spracherkennungssystems erstellt werden kann.

Der Erfindung liegt deshalb die Aufgabe zugrunde, ein Verfahren zum Erzeugen einer Sprachdatenbank für einen Zielwortschatz zum Trainieren eines Spracherkennungssystems zu schaffen, mit welchem schneller und vor allem kostengünstiger die Sprachdatenbank erzeugt werden kann.

Die Aufgabe wird durch ein Verfahren mit den Merkmalen des Anspruchs 1, sowie durch eine Vorrichtung mit Merkmalen des Anspruchs 11 gelöst. Vorteilhafte Ausgestaltungen der Erfindung sind in den Unteransprüchen angegeben.

Gemäß dem erfindungsgemäßen Verfahren zum Erzeugen einer Sprachdatenbank für einen Zielwortschatz zum Trainieren eines Spracherkennungssystems werden
die Worte des Zielwortschatzes in eine phonetische Beschreibung umgesetzt, so dass die einzelnen Worte durch Phoneme dargestellt werden, und
aus einem oder mehreren Phonen zusammengesetzte Segmente eines gesprochenen, vom Zielwortschatz unabhängigen Trainingstextes, werden zu Wörtern des Zielwortschatzes entsprechend der phonetischen Beschreibung konkateniert bzw. zusammengesetzt.

Mit dem erfindungsgemäßen Verfahren werden Segmente eines vom Zielwortschatz unabhängigen Trainingstextes zu den Wörtern des Zielwortschatzes zusammengesetzt. Der Trainingstext kann somit ein beliebiger bereits vorab aufgezeichneter und in einzelne Sprachsegmente segmentierter Text sein. Zum Erzeugen der Sprachdatenbank ist es deshalb nicht notwendig, jedes Mal einen den Zielwortschatz enthaltenden Trainingstext zu erstellen und aufzuzeichnen. Es ist vielmehr möglich, vorhandene Sprachdatenbanken mit allgemeinen Wortschätzen zu verwenden. Die Wörter dieser vorhandenen Sprachdatenbanken werden vorab segmentiert. Diese Segmentierung kann manuell oder automatisch erfolgen. Grundsätzlich genügt es, dass für jede Sprache eine derartig segmentierte Datenbank lediglich ein einziges Mal vorliegt. Ausgehend von dieser Datenbank wird mit dem erfindungsgemäßen Verfahren eine für eine Applikation spezifische Sprachdatenbank erzeugt. Ein erneutes Sprechen eines Trainingstextes ist somit nicht notwendig.

Mit dem erfindungsgemäßen Verfahren kann schnell und kostengünstig eine zum Trainieren eines sprecherunabhängigen Spracherkennungssystems geeignete Sprachdatenbank erzeugt werden, wobei es nicht notwendig ist, dass spezielle Trainingstexte aufgezeichnet werden, wodurch die Kosten im Vergleich zu den bekannten Methoden zum Erstellen derartiger Sprachdatenbanken drastisch vermindert werden.

Vorzugsweise werden die Wörter des Zielwortschatzes aus möglichst langen Segmenten zusammengesetzt. Sollte dies nicht möglich sein, müssen den einzelnen Phonemen der Wörter relativ kurze Segmente mit jeweils einem einzigen Phon zugeordnet und zu dem entsprechenden Wort konkateniert werden. Dies erfolgt vorzugsweise unter Berücksichtigung des Kontextes, in dem die jeweiligen Phoneme der Wörter und der Phone des Trainingstextes angeordnet sind.

Nach einer weiteren bevorzugten Ausführungsform werden konkatenierte Segmente an ihren Grenzen zwischen zwei benachbarten Segmenten geglättet.

Die Segmente können in Form von elektrischen Sprachsignalen oder als Merkmalsvektoren vorliegen. Letztere Darstellungsform ist vorteilhaft, da der Datenumfang der Merkmalsvektoren deutlich geringer als der der elektrischen Sprachsignale ist.

Die Erfindung wird nachfolgend beispielhaft anhand der beiliegenden Zeichnungen näher erläutert. In denen zeigen schematisch:
- Fig. 1: ein Verfahren zum Aufbereiten eines aufgezeichneten Trainingstextes für das erfindungsgemäße Verfahren,
- Fig. 2: einen allgemeinen Überblick über die Abläufe beim erfindungsgemäßen Verfahren zum Erzeugen einer Sprachdatenbank in einem Flussdiagramm,
- Fig. 3: das Verfahren zum Konkatenieren der Wörter des Zielwortschatzes aus Sprachsegmenten in einem Flussdiagramm, und
- Fig. 4: ein Computersystem zum Ausführen des erfindungsgemäßen Verfahren in einem Blockschaltbild.

Das erfindungsgemäße Verfahren betrifft im Allgemeinen das Konkatenieren bzw. Zusammensetzen von Wörtern eines Zielwortschatzes aus Segmenten eines gesprochenen Textes.

Der Zielwortschatz ist phonetisch zu beschreiben, das heißt, dass die einzelnen Worte durch Phoneme dargestellt sind. Die Segmente sind aus einzelnen Phonen zusammengesetzt.

Im Sinne der vorliegenden Beschreibung der Erfindung ist ein Phonem die kleinste bedeutungsunterscheidende, aber nicht selbst bedeutungstragende sprachliche Einheit (z.B. b in Bein im Unterschied zu p in Pein). Ein Phon ist hingegen der ausgesprochene Laut eines Phonems. Phoneme werden in einer Lautschrift dargestellt, wobei jeder "Buchstabe" der Lautschrift ein Phonem darstellt. Phone werden durch physikalische Größen dargestellt, die den ausgesprochenen Laut an sich wiedergeben. Diese physikalischen Größen können elektrische Sprachsignale sein, die an einem Lautsprecher in entsprechende akustische, den Laut darstellende Signale gewandelt werden können. Phone können jedoch auch durch sogenannte Merkmalsvektoren dargestellt werden. Merkmalsvektoren umfassen Koeffizienten, die das entsprechende Sprachsignal zu einem bestimmten Zeitpunkt wiedergeben. Derartige Koeffizienten werden durch Abtasten des Sprachsignals in vorbestimmten Zeitabständen erhalten. Typische Zeitabstände sind 10 ms bis 25 ms. Bekannte Koeffizienten sind die ACF-Koeffizienten (Auto-Correlation-Function) und die LPCC-Koeffizienten (Linear-Predictive-Cepstral Coefficient).

Die obigen Erläuterungen können dahingehend kurz zusammengefasst werden, dass Phoneme die symbolische Beschreibung einzelner Laute und Phone die physikalische Beschreibung der Laute sind.

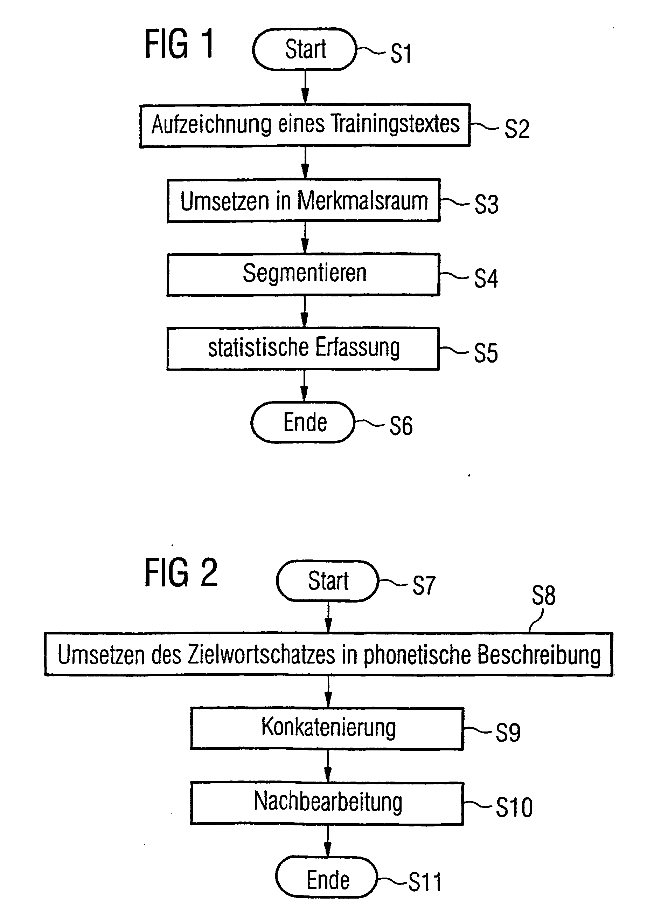

Nachfolgend wird anhand von Fig. 1 ein Verfahren zum Aufbereiten eines Trainingstextes in Sprachsegmente erläutert, wobei die Sprachsegmente ein oder mehrere Phone umfassen.

Das Verfahren beginnt im Schritt S1. Im Schritt S2 werden von mehreren Sprechern ein oder mehrere Trainingstexte gesprochen und elektronisch aufgezeichnet.

Die elektronisch aufgezeichneten Trainingstexte werden im Schritt S3 zur Datenreduktion in Merkmalsvektoren umgesetzt.

Die derart gespeicherte Sprachaufzeichnung wird im Schritt S4 in Segmente aufgeteilt, wobei die einzelnen Segmente jeweils ein einziges Phon umfassen. Diese Segmentierung wird in der Regel automatisch durchgeführt. Die Sprachaufzeichnung kann jedoch bereits vor der Umsetzung in Merkmalsvektoren manuell von einem Sprachexperten vorsegmentiert werden.

Diese jeweils ein einziges Phon umfassenden Segmente werden im Schritt S5 statistisch erfasst, wobei typische Laute und Lautfolgen statistisch ausgewertet und festgehalten werden. Diese statistischen Informationen über die Lautfolgen geben in Verbindung mit den Segmenten, die jeweils nur ein einziges Phon enthalten, eine Darstellung der im Trainingstext enthaltenen Segmente mit mehreren Phonen wieder. Hierdurch stehen für die weitere Auswertung nicht nur Segmente mit einem einzigen Phon, sondern auch längere Segmente mit zumindest zwei Phonen zur Verfügung.

Im Schritt S5 wird vorzugsweise eine Energie-Normierung der einzelnen Segmente ausgeführt, da die unterschiedlichen Sprecher üblicherweise mit einer unterschiedlichen Lautstärke sprechen, so dass die einzelnen Segmente unterschiedlicher Sprecher nicht miteinander vergleichbar und oftmals auch nicht zu einem neuen Wort zusammensetzbar sind.

Dieses Verfahren zum Aufbereiten der Segmente wird im Schritt S6 beendet.

Mit dem in Fig. 1 gezeigten Verfahren zum Aufbereiten eines Trainingstextes wird eine Segmentdatenbank erstellt. Grundsätzlich genügt es, dass für jede Sprache, für die das erfindungsgemäße Verfahren angewendet werden soll, lediglich eine einzige Segmentdatenbank erstellt wird. Als Trainingstexte werden allgemeine Texte verwendet, die für die wichtigsten Sprachen bereits als Datenbank in Form von beispielsweise einer ASCII-Datei für die Texte und in Form von Sprachsignalen in großem Umfang existieren.

In Fig. 2 ist der allgemeine Ablauf des erfindungsgemäßen Verfahrens zum Erzeugen einer Sprachdatenbank für einen vorgegebenen Zielwortschatz in Form eines Flußdiagrammes dargestellt.

Der Zielwortschatz liegt als Textdatei (z.B. ASCII-Datei) vor. Der Zielwortschatz umfasst die für die beabsichtigte Applikation notwendigen Wörter. Solche Zielwortschätze können beispielsweise nur wenige Wörter (z.B. 20 bis 50 Wörter) umfassen, die beispielsweise zum Ansteuern eines bestimmten Gerätes notwendig sind. Es ist jedoch auch möglich, noch kleinere mit sogar nur einem einzigen Wort oder auch größere Zielwortschätze vorzusehen, die beispielsweise einige tausend Wörter umfassen.

Das Verfahren zum Erzeugen einer Sprachdatenbank beginnt mit dem Schritt S7. Im Schritt S8 werden die Wörter des Zielwortschatzes in ihre phonetische Beschreibung umgesetzt. Hierzu sind regelbasierte Verfahren bekannt, die automatisch eine derartige Umsetzung vornehmen. Grundsätzlich ist es auch möglich, statistische Verfahren zu verwenden. Neuere Verfahren zum Umsetzen einer Textdatei in ihre phonetische Schreibweise beruhen auf neuronalen Netzwerken.

Im darauffolgenden Schritt S9 werden die Segmente des Trainingstextes zu den einzelnen Wörtern des Zielwortschatzes konkateniert. Hierbei werden Segmente, deren Phone den Phonemen der Wörter des Zielwortschatzes entsprechen zu den entsprechenden Wörtern zusammengesetzt bzw. konkateniert.

Sind alle Wörter des Zielwortschatzes konkateniert, kann im Schritt S10 eine Nachbearbeitung durchgeführt werden. Hierbei wird bspw. eine Datenreduktion durchgeführt, falls die konkatenierten Wörter als Sprachsignal vorliegen.

Im Schritt S11 ist das Verfahren beendet.

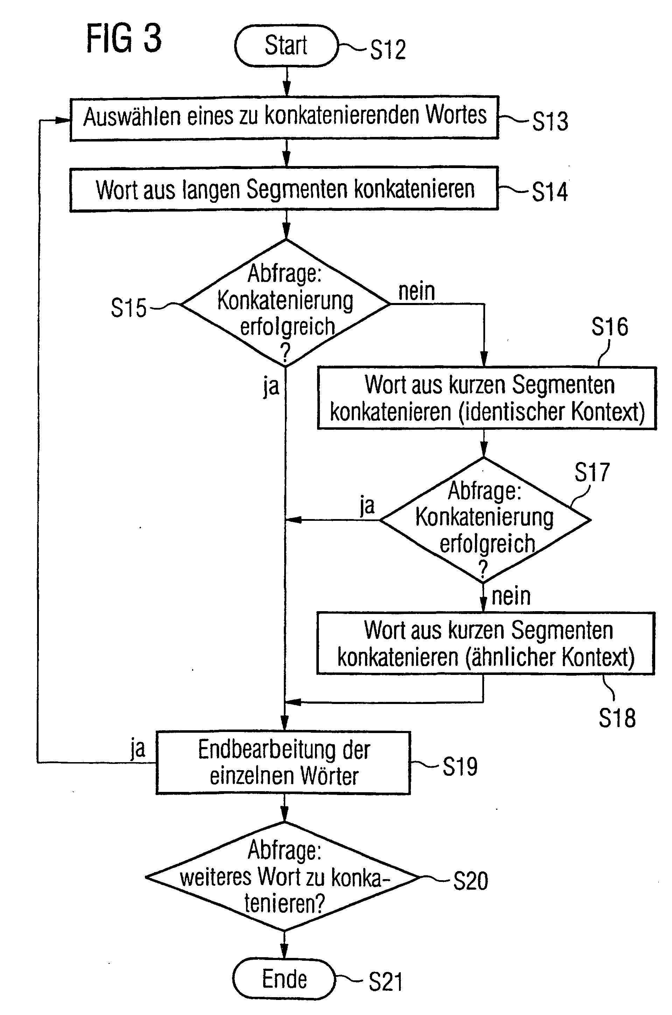

In Fig. 3 sind in einem Flussdiagramm die einzelnen beim Konkatenieren auszuführenden Verfahrensschritte dargestellt.

Dieser Konkateniervorgang beginnt mit dem Schritt S12. Zmnächst wird im Schritt S13 ein Wort des Zielwortschatzes ausgewählt, das zu Konkatenieren ist.

Im Schritt S14 wird versucht, das ausgewählte Wort mittels einem einzigen oder wenigen langen Segmenten zusammen zu setzen. Hierbei werden aus der Segmentdatenbank Segmente ausgewählt, deren Phonemzuordnung mit den Phonemen des zu konkatenierenden Wortes übereinstimmt.

Im Schritt S15 wird abgefragt, ob das Wort aus den langen Segmenten erfolgreich konkateniert werden konnte. Ist das Ergebnis dieser Abfrage nein, so bedeutet dies, dass keine geeigneten langen Segmente in der Segmentdatenbank vorhanden sind, aus welchen das Wort zusammengesetzt werden kann. Der Verfahrensablauf geht deshalb auf den Schritt S16 über, bei dem das Wort aus einzelnen Phonemen unter Berücksichtigung des entsprechenden Kontextes konkateniert wird. Hierbei werden Segmente mit einem einzigen Phon den korrespondierenden Phonemen des zu konkatenierenden Wortes zugeordnet, wobei jedoch nur Phone verwendet werden, deren benachbarte Phone im Trainingstext den zu dem jeweiligen Phonem benachbarten Phonemen im zu konkatenierenden Wort entsprechen. Wird z.B. das Phon "f" dem Phonem "f" im Wort "Anfang" zugeordnet, so wird ein Segment mit dem Phon "f" aus dem Trainingstext gewählt, das im Trainingstext zwischen den Phonen "n" und "a" angeordnet ist. Der Kontext "nfa" des Segmentes "f" stimmt somit mit dem Kontext des Phonems "f" des Wortes aus dem Zielwortschatz überein.

Im Schritt S17 wird geprüft, ob das zu konkatenierende Wort vollständig konkateniert werden konnte. Ergibt diese Überprüfung ein "nein", so geht der Verfahrensablauf auf den Schritt S18 über. Im Schritt S18 werden für diejenigen Phoneme, denen noch keine Segmente zugeordnet werden konnten, Segmente ausgewählt, deren Phon mit dem entsprechenden Phonem möglichst übereinstimmt und deren Kontext möglichst ähnlich ist. Sind keine Segmente mit Phonen, die den Phonemen unmittelbar entsprechen, vorhanden, werden solche Segmente ausgewählt, deren Phone den Phonemen möglichst ähnlich sind.

Die Ähnlichkeit der Kontexte bzw. der Phone zu den einzelnen Phonemen wird nach vorbestimmten Regeln beurteilt. Diese Regeln können z.B. als Listen in einer speziellen Ähnlichkeitsdatenbank abgespeichert sein, wobei zu jedem Phonem eine Liste weiterer Phoneme gespeichert ist, und die weiteren Phoneme mit abnehmender Ähnlichkeit sortiert sind. Zu dem Phonem "p" ist z.B. folgende Liste mit "b, d, t, ..." gespeichert. Dies bedeutet, dass das Phonem "b" am ähnlichsten zu dem Phonem "p" ist und das Phonem "d" das zweitähnlichste Phonem ist.
Die Ähnlichkeitsdatenbank kann auch Kontexte mit zwei oder mehreren Phonemen umfassen. Zum Kontext "_a_s" wird z.B. die Liste "_a_f, _a_x, ..." abgespeichert. Dies bedeutet, dass der Kontext "_a_f" am ähnlichsten zu "_a_s" ist. Die Reihenfolge der gespeicherten ähnlichen Phoneme kann sich je nach der Definition des Kriteriums der "Ähnlichkeit" unterscheiden. Die oben verwendete Notation "_a_s" ist eine firmeninterne Notation und bedeutet:
_a_s: Phonem a mit Rechtskontext s
_a_x: Phonem a mit Rechtskontext x
t_a_: Phonem a mit Linkskontext t
p_a_: Phonem a mit Linkskontext p usw.

Anstelle derartiger Listen oder in Ergänzung zu diesen Listen können auch allgemeine Regeln zum Vergleich von ähnlichen Kontexten vorgesehen sein. So können in einem Kontext z.B. Plosive oder Frikative grundsätzlich als sehr ähnlich beurteilt werden.

Nach dem Zuordnen der ähnlichsten Segmente zu den entsprechenden Phonemen des zu konkatenierenden Wortes geht der Verfahrensablauf auf den Schritt S19 über. Sollte sich bei den abfragenden Schritten S15 und S17 ergeben, dass die Konkatenierung erfolgreich ausgeführt worden ist, so geht auch hier der Verfahrensablauf unmittelbar auf den Schritt S19 über.

Im Schritt S19 erfolgt die Endbearbeitung der einzelnen konkatenierten Wörter. Diese Endbearbeitung kann folgende Teilschritte einzeln oder in Kombination umfassen:
- Am Anfang und am Ende eines soeben konkatenierten Wortes wird eine für den Anfang und das Ende des Wortes typische Geräuschsequenz angefügt.
- Die einzelnen Segmente in den Wörtern werden normiert. Dies ist insbesondere zweckmäßig, wenn eine Segmentdatenbank mit nicht-normierten Segmenten verwendet wird.
- Die Übergänge an den Grenzen zwischen zwei benachbarten Segmenten werden geglättet, wobei die erste und die zweite Ableitung des Sprachsignals oder der Koeffizienten der Merkmalsvektoren an der Übergangsstelle möglichst 0 beträgt.

Im Schritt S20 wird geprüft, ob noch ein weiteres Wort des Zielwortschatzes zu konkatenieren ist. Ergibt die Abfrage ein ja, so geht der Verfahrensablauf auf den Schritt S13 über, wohingegen das Verfahren im Schritt S21 beendet wird, falls die Abfrage ein nein ergibt.

Die mit dem erfindungsgemäßen Verfahren konkatenierten Wörter des Zielwortschatzes stellen eine Sprachdatenbank dar, mit der ein Spracherkennungssystem auf den Zielwortschatz trainiert werden kann. Zum Erstellen dieser Sprachdatenbank ist es nicht notwendig, dass spezielle den Zielwortschatz enthaltende Trainingstexte erstellt werden, die von Sprechern gesprochen und aufgezeichnet werden müssen. Vielmehr können durch das erfindungsgemäße Verfahren ein allgemeiner Trainingstext, der einmal von einem oder mehreren Sprechern gesprochen worden ist, und entsprechend segmentiert worden ist, zur Erzeugung einer Sprachdatenbank für einen speziellen Zielwortschatz ausgewertet werden. Dies bedeutet einen erheblichen Zeitgewinn und eine enorme Kosteneinsparung bei der Erzeugung einer Sprachdatenbank für einen speziellen Zielwortschatz.

Mit einem sehr vereinfachten Prototypen des erfindungsgemäßen Verfahrens ist ein Zielwortschatz mit zehn Wörtern konkateniert worden, wobei lediglich Segmente mit einem oder zwei Phonen berücksichtigt worden sind. Bei diesem Prototypen wurde weder eine Normierung vorgenommen, noch die Übergänge zwischen benachbarten Segmenten geglättet. Zudem beruhte die Segmentdatenbank auf einem Trainingstext mit nur 60 unterschiedlichen Wörtern.

Trotz dieser sehr geringen Datenmenge und des stark vereinfachten Verfahrens ist eine Erkennungsrate von ca. 80% erzielt worden.

Die Erfindung ist oben anhand eines Ausführungsbeispiels näher erläutert worden. Sie ist jedoch nicht auf das konkrete Ausführungsbeispiel beschränkt. So ist es z.B. im Rahmen der Erfindung möglich, für jedes Phonem eines zu konkatenierenden Wortes mehrere ähnliche Segmente aus der Segmentdatenbank auszuwählen und diese dann aufgrund ihrer Ähnlichkeit zum Phonem bzw. zum Kontext der aus zwei, drei, vier oder mehreren Phonemen bestehen kann, zu bewerten. Das ähnlichste Segment wird ausgewählt. Es ist jedoch auch möglich, eine Gruppe ähnlicher Segmente auszuwählen und anstelle ein einzelnes Segment zu bestimmen, das dem Phonem zugeordnet wird, aus dieser Gruppe von Segmenten ein mittleres Segment zu berechnen, das dem Phonem zugeordnet wird. Dies ist insbesondere dann zweckmäßig, wenn die Phone der Segmente durch Merkmalsvektoren beschrieben werden, die gemittelt werden können. Anstelle einer Mittlung der mehreren Segmente kann auch ein Segment bestimmt werden, dessen Abstand (Vektorabstand der Merkmalsvektoren) zu den ausgewählten Segmenten am geringsten ist.

Das erfindungsgemäße Verfahren kann als Computerprogramm realisiert werden, das selbstständig auf einem Computer zum Erzeugen einer Sprachdatenbank aus einer Segmentdatenbank ablaufen kann. Es stellt somit ein automatisch ausführbares Verfahren dar.

Das Computerprogramm kann auf elektrisch lesbaren Datenträgern gespeichert werden und so auf andere Computersysteme übertragen werden.

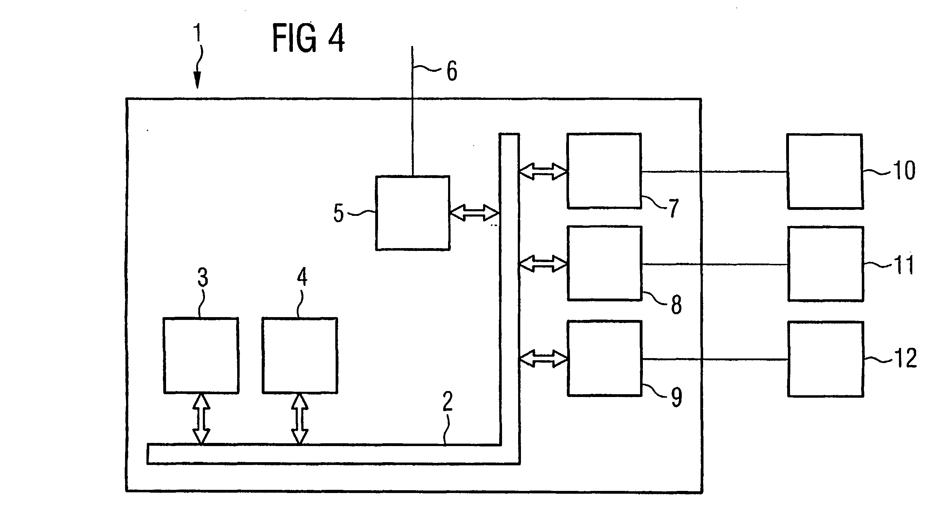

Ein zur Anwendung des erfindungsgemäßen Verfahrens geeignetes Computersystem ist in Fig. 4 gezeigt. Das Computersystem 1 weist einen internen Bus 2 auf, der mit einem Speicherbereich 3, einer zentralen Prozessoreinheit 4 und einem Interface 5 verbunden ist. Das Interface 5 stellt über eine Datenleitung 6 eine Datenverbindung zu weiteren Computersystemen her. An dem internen Bus 2 sind ferner eine akustische Eingabeeinheit 7, eine grafische Ausgabeeinheit 8 und eine Eingabeeinheit 9 angeschlossen. Die akustische Eingabeeinheit 7 ist mit einem Mikrofon 10, die grafische Ausgabeeinheit 8 mit einem Bildschirm 11 und die Eingabeeinheit 9 mit einer Tastatur 12 verbunden. An dem Computersystem 1 kann beispielsweise über die Datenleitung 6 und das Interface 5 ein Zielwortschatz übertragen werden, der im Speicherbereich 3 abgespeichert wird. Der Speicherbereich 3 ist in mehrere Bereiche unterteilt, in denen der Zielwortschatz, das Programm zum Ausführen des erfindungsgemäßen Verfahrens und weitere Anwendungsund Hilfsprogramme gespeichert sind. Mit dem erfindungsgemäßen Verfahren wird eine Sprachdatenbank zum Zielwortschatz erstellt. Diese Sprachdatenbank wird dann zum Trainieren eines Spracherkennungssystems verwendet. Das Spracherkennungssystem kann eingehende Audiodateien in Text-Dateien automatisch umsetzen. Die Audiodateien können durch Sprechen eines Testes in das Mikrofon 10 erzeugt werden.

## Patentansprüche

1. Verfahren zum Erzeugen einer Sprachdatenbank für einen Zielwortschatz zum Trainieren eines Spracherkennungssystems, wobei
die Worte des Zielwortschatzes in eine phonetische Beschreibung umgesetzt werden (S8), so dass die einzelnen Worte durch Phoneme dargestellt werden, und
aus einem oder mehreren Phonen zusammengesetzte Segmente eines gesprochenen, vom Zielwortschatz unabhängigen Trainingstextes, zu Wörtern des Zielwortschatzes entsprechend der phonetischen Beschreibung konkateniert werden (S9).

2. Verfahren nach Anspruch 1,
**dadurch gekennzeichnet,**
**dass** möglichst lange Segmente ausgewählt werden, aus welchen die Wörter konkateniert werden.

3. Verfahren nach Anspruch 2,
**dadurch gekennzeichnet,**
**dass** zu den einzelnen Segmenten Kontextinformationen von einem oder mehrerer benachbarter Phone im Trainingstext gespeichert sind (S5), und falls nicht alle Phoneme eines Wortes aus Segmenten mit mindestens zwei Phonen konkatenierbar sind, Segmente mit jeweils einem einzigen Phon ausgewählt werden, deren Phone den nicht aus längeren Segmenten konkatenierbaren Phonemen im zu konkatenierenden Wort entsprechen und deren Kontextinformationen mit den Kontexten dieser Phoneme im zum konkatenierenden Wort übereinstimmen (S17).

4. Verfahren nach Anspruch 3,
**dadurch gekennzeichnet,**
**dass** beim Konkatenieren von Segmenten mit einzelnen Phonen, falls keine Segmente deren Kontextinformation mit den Kontexten der Phoneme des zu konkatenierenden Wortes übereinstimmen, vorhanden sind, Segmente mit jeweils einem einzigen Phon ausgewählt werden, deren Phone den nicht aus längeren Segmenten konkatenierbaren Phonemen im zu konkatenierenden Wort entsprechen und deren Kontextinformationen mit den Kontexten dieser Phoneme im zum konkatenierenden Wort möglichst ähnlich sind (S18).

5. Verfahren nach einem der Ansprüche 1 bis 4
**dadurch gekennzeichnet,**
**dass** die zu konkatenierten Segmente an den Grenzen zwischen zwei benachbarten Segmenten geglättet werden (S19).

6. Verfahren nach einem der Ansprüche 1 bis 5,
**dadurch gekennzeichnet,**
**dass** die einzelnen Segmente vor dem Konkatenieren energienormiert werden (S19).

7. Verfahren nach einem der Ansprüche 1 bis 6,
**dadurch gekennzeichnet,**
**dass** die Segmente in Form von elektrischen Sprachsignalen vorliegen.

8. Verfahren nach einem der Ansprüche 1 bis 6,
**dadurch gekennzeichnet,**
**dass** die Segmente durch Merkmalsvektoren dargestellt sind.

9. Verfahren nach Anspruch 8,
**dadurch gekennzeichnet,**
**dass** falls beim Auswählen der Segmente vor dem Konkatenieren mehrere dem Phonem bzw. den Phonemen des zu konkatenierenden Wortes zuordbare Segmente vorhanden sind, ein Segment entweder durch Mitteln der Merkmalsvektoren der zuordbaren Segmente oder dasjenige Segment bestimmt wird, dessen Merkmalsvektor den geringsten mittleren Abstand zu den zuordbaren Segmenten besitzt.

10. Verfahren nach einem der Ansprüche 1 bis 9,
**dadurch gekennzeichnet,**
**dass** die zu Worten konkatenierten Segmente einer Datenreduktion unterzogen werden.

11. Vorrichtung zum Erzeugen einer Sprachdatenbank für einen Zielwortschatz zum Trainieren eines Spracherkennungssystems, mit
einem Computersystem (1), das einen Speicherbereich (3) aufweist, in dem ein Computerprogramm zum Ausführen eines jeden Schrittes eines Verfahrens nach einem der Ansprüche 1 bis 10 auf diesem Computersystem gespeichert ist.

## Claims

1. Method for creating a speech database for a target vocabulary for training a speech recognition system, the words of the target vocabulary being converted (S8) into a phonetic description so that the individual words are represented by phonemes, and segments, composed of one or more phones, of a spoken training text which is independent of the target vocabulary being concatenated (S9) to form words of the target vocabulary in accordance with the phonetic description.

2. Method according to Claim 1, **characterized in that** segments which are as long as possible are selected and the words are concatenated from them.

3. Method according to Claim 2, **characterized in that** context information, relating to the individual segments, of one or more adjacent phones is stored (S5) in the training text and if it is not possible to concatenate all the phonemes of a word from segments with at least two phones, segments are selected which have in each case a single phone and whose phones correspond to the phonemes in the word to be concatenated which cannot be concatenated from relatively long segments and whose context information corresponds (S17) to the contexts of these phonemes in the word to be concatenated.

4. Method according to Claim 3, **characterized in that** if no segments whose context information corresponds to the contexts of the phonemes of the word to be concatenated are present when segments with individual phones are concatenated, segments are selected which have in each case a single phone and whose phones correspond to the phonemes in the word to be concatenated which cannot be concatenated from relatively long segments and whose context information is as similar as possible (S18) to the contexts of these phonemes in the word to be concatenated.

5. Method according to one of Claims 1 to 4, **characterized in that** the segments to be concatenated are smoothed (S19) at the boundaries between two adjacent segments.

6. Method according to one of Claims 1 to 5, **characterized in that** the individual segments are energy-standardized (S19) before the concatenation.

7. Method according to one of Claims 1 to 6, **characterized in that** the segments are present in the form of electrical speech signals.

8. Method according to one of Claims 1 to 6, **characterized in that** the segments are represented by means of feature vectors.

9. Method according to Claim 8, **characterized in that** if a plurality of segments which can be assigned to the phoneme or the phonemes of the word to be concatenated are present when the segments are selected before the concatenation, a segment is determined either by averaging the feature vectors of the assignable segments, or that segment whose feature vector has the smallest average distance from the assignable segments is determined.

10. Method according to one of Claims 1 to 9, **characterized in that** the segments which are concatenated to form words are subjected to data reduction.

11. Device for creating a speech database for a target vocabulary for training a speech recognition system, with a computer system (1) which has a storage area (3) in which a computer program for executing one of each, of the steps of a method according to one of Claims 1 to 10 is stored on this computer system.

## Revendications

1. Procédé de création d'une base de données pour un lexique cible destiné à l'entraînement d'un système de reconnaissance vocale,
les mots du lexique cible étant convertis en une description phonétique (S8), pour que chaque mot soit représenté par des phonèmes, et
des segments d'un texte d'entraînement parlé indépendant du lexique cible, composés d'un ou de plusieurs phones étant enchaînés en mots du lexique cible, conformément à la description phonétique (S9).

2. Procédé selon la revendication 1,
**caractérisé en ce que**
des segments les plus longs possibles, à partir desquels les mots sont enchaînés, sont sélectionnés.

3. Procédé selon la revendication 2,
**caractérisé en ce que**
avec les segments individuels, des informations contextuelles d'un ou de plusieurs phones voisins au sein du texte d'entraînement sont mémorisés (S5) et si tous les phonèmes d'un mot ne peuvent pas être enchaînés en segments composés d'au moins deux phones, des segments respectivement composés d'un seul phone, dont les phones correspondent aux phonèmes qui ne peuvent être enchaînés en segments plus longs dans le mot devant être enchaîné et dont les informations contextuelles concordent avec les contextes de ces phonèmes au sein du mot devant être enchaîné sont sélectionnés (S17).

4. Procédé selon la revendication 3,
**caractérisé en ce que**
lors de la concaténation de segments avec des phones individuels, si aucun segment dont l'information contextuelle concorde avec les contextes des phonèmes du mot devant être composé par enchaînement n'est disponible, des segments composés respectivement d'un seul phone et dont les phones correspondent aux phonèmes ne pouvant être composés par enchaînement en segments plus longs dans le mot devant être composé par enchaînement et dont les informations contextuelles sont le plus similaires possibles avec les contextes desdits phonèmes dans le mot devant être enchaîné sont sélectionnés (S18).

5. Procédé selon l'une quelconque des revendications 1 à 4,
**caractérisé en ce que**
les segments devant être composés par enchaînement sont lissés aux limites entre deux segments voisins (S19).

6. Procédé selon l'une quelconque des revendications 1 à 5,
**caractérisé en ce que**
chaque segment est normalisé en énergie, avant la concaténation (S19).

7. Procédé selon l'une quelconque des revendications 1 à 6,
**caractérisé en ce que**
les segments sont présents sous forme de signaux vocaux électriques.

8. Procédé selon l'une quelconque des revendications 1 à 6,
**caractérisé en ce que**
les segments sont représentés par des vecteurs de caractéristiques.

9. Procédé selon la revendication 8,
**caractérisé en ce que**
si lors de la sélection des segments avant la concaténation, plusieurs segments pouvant être affectés au phonème resp. aux phonèmes du mot devant être enchaîné sont disponibles, un segment est déterminé soit par calcul de la moyenne des vecteurs de caractéristiques des segments pouvant être affectés ou le segment dont le vecteur de caractéristiques présente la distance la plus faible par rapport au segment pouvant être affecté est déterminé.

10. Procédé selon l'une quelconque des revendications 1 à 9,
**caractérisé en ce que**
les segments enchaînés en mots sont soumis à une réduction des données.

11. Dispositif pour la création d'une base de données vocales pour un lexique cible destiné à l'entraînement d'un système de reconnaissance vocale, avec
un système informatique (1), présentant une zone mémoire (3), dans laquelle un programme informatique pour la réalisation de chaque étape d'un procédé selon l'une quelconque des revendications 1 à 10 sur ledit système informatique est mémorisé.
